# EUROPÄISCHE PATENTANMELDUNG

(11) **EP 4 810 412 A1**
(43) Veröffentlichungstag der Anmeldung: **23.09.2026**
(21) Anmeldenummer: 26164918.0
(22) Anmeldetag: 16.03.2026
(51) Int. Cl.: B65G 45/22, B65G 15/02, B65G 33/04, B08B 1/20, B08B 3/02, B65G 45/12

(54) **VERFAHREN UND VORRICHTUNG ZUR REINIGUNG EINES WENDELFÖRDERSYSTEMS**

(30) Priorität: 17.03.2025 DE 102025110237
(71) Anmelder: Heinen GmbH & Co. KG, 26349 Jade (DE)
(72) Erfinder: Folkens, Frank, 26345 Bockhorn (DE); Malek, Stephanie, 26316 Varel (DE); Schlarmann, Renke, 26446 Zetel (DE)
(74) Vertreter: Jabbusch, Matthias

(57) **Zusammenfassung**

Die Erfindung betrifft ein Verfahren zur Reinigung eines Wendelfördersystems, bei dem ein endloser, kurvengängiger Fördergurt von einem Trommeleinlauf zu einem Trommelauslauf schraubenförmig um wenigstens eine motorisch angetriebene Trommel geführt wird. Dieses zeichnet sich dadurch aus, dass eine Reinigungsmittelabgabeeinheit wenigstens für die Dauer einer durchzuführenden Reinigung des Wendelfördersystems auf dem Fördergurt aufsteht, dass die auf dem Fördergurt aufstehende Reinigungsmittelabgabeeinheit mit der angetriebenen Trommel um diese herum geführt wird und dass die Reinigungsmittelabgabeeinheit während der Reinigung des Wendelfördersystems trommelseitig mit Reinigungsmittel versorgt wird. Weiter betrifft die Erfindung auch ein entsprechendes Wendelfördersystem.

## Beschreibung

Die Erfindung betrifft ein Verfahren zur Reinigung eines Wendelfördersystems, bei dem ein endloser, kurvengängiger Fördergurt von einem Trommeleinlauf zu einem Trommelauslauf schraubenförmig um wenigstens eine motorisch angetriebene Trommel geführt wird. Weiter betrifft die Erfindung auch ein entsprechendes Wendelfördersystem mit einem endlosen, kurvengängigen Fördergurt, wenigstens einer motorisch angetriebenen Trommel, um die herum der Fördergurt zwischen einem Trommeleinlauf und einem Trommelauslauf schraubenförmig gewickelt ist, wobei der Fördergurt zwischen dem Trommeleinlauf und dem Trommelauslauf an der Trommel gehalten ist, und einer Reinigungseinrichtung.

An die Reinigung entsprechender Wendelfördersysteme werden, insbesondere in Verbindung mit der Produktion von zum Beispiel Nahrungsmitteln, hohe Anforderungen gestellt. Während der Fördergurt selbst auf einfache Weise abseits der Trommel durch eine Reinigungseinrichtung gefördert werden kann, müssen zwischen dem Trommeleinlauf und dem Trommelauslauf der Trommel zugeordnete, feststehende Teile, wie Gurtschienen, Luftführungselemente, Stützen oder Träger, auf denen der Fördergurt aufliegt, zusammen mit der Trommel gereinigt werden. Gemäß dem Stand der Technik sind hierzu an der Trommel feststehende Reinigungsdüsen angeordnet. Diese liefern in Abhängigkeit von deren Sprühbild und sich konstruktionsbedingt ergebenden Sprühschatten jedoch nur ein unbefriedigendes Reinigungsergebnis und erfordern zudem große Mengen an Reinigungsmitteln, da diese nicht zielgerichtet genug aufgetragen werden können. Alternativ oder ergänzend zu den feststehenden Reinigungsdüsen bleibt daher zumeist nur eine manuelle Reinigung, welche jedoch besonders aufwendig ist und zu einem erhöhten Zeit- und Kostenbedarf führt.

Aufgabe der Erfindung ist es daher, ein Verfahren und ein Wendelfördersystem bereitzustellen, mit dem auch der Trommel zugeordnete feststehende Teile, wie Gurtschienen, Luftführungselemente, Stützen oder Träger effektiv gereinigt werden können und bei dem für die Reinigung zudem weniger Reinigungsmittel benötigt wird.

Das Verfahren zur Reinigung eines Wendelfördersystems, bei dem ein endloser, kurvengängiger Fördergurt von einem Trommeleinlauf zu einem Trommelauslauf schraubenförmig um wenigstens eine motorisch angetriebene Trommel geführt wird, zeichnet sich erfindungsgemäß dadurch aus, dass eine Reinigungsmittelabgabeeinheit wenigstens für die Dauer einer durchzuführenden Reinigung des Wendelfördersystems auf dem Fördergurt aufsteht, dass die auf dem Fördergurt aufstehende Reinigungsmittelabgabeeinheit mit der angetriebenen Trommel um diese herum geführt wird und dass die Reinigungsmittelabgabeeinheit während der Reinigung des Wendelfördersystems trommelseitig mit Reinigungsmittel versorgt wird.

Indem die Reinigungsmittelabgabeeinheit zusammen mit dem Fördergurt durch das Wendelfördersystem hindurchbewegt wird, ist sichergestellt, dass die Reinigungsmittelabgabeeinheit sämtliche der Trommel zugeordnete, zu reinigende Teile, wie Gurtschienen, Luftführungselemente, Stützen oder Träger des Wendelfördersystems passiert. Die sich bei feststehenden Reinigungsdüsen ergebenden Sprühschatten sind somit effektiv vermieden, so dass Reinigungsmittel auf alle Teile aufgebracht werden kann, welche gurtseitig an der Trommel ausgebildet sind, z. B. Gurtschienen, Luftführungselemente, und Stützen dieser.

Insbesondere wird die Reinigungsmittelabgabeeinheit dabei von dem Trommeleinlauf bis zu dem Trommelauslauf von der Trommel mitgeführt, so dass eine gesamte um die Trommel gewickelte, produktführende Wegstrecke des Wendelfördersystems von der Reinigungsmittelabgabeeinheit passiert und gereinigt wird.

Nach einer Weiterbildung des Verfahrens wird ein Schlitten einer Reinigungsmittelzuführeinheit zusammen mit der Reinigungsmittelabgabeeinheit während der Reinigung entlang einer Trommellängsachse der Trommel verschoben. Über den entlang der Trommellängsachse verfahrbaren Schlitten ist erreicht, dass die Reinigungsmittelabgabeeinheit für die gesamte Dauer und die gesamte zurückzulegende Wegstrecke eines Reinigungsvorgangs mit Reinigungsmittel versorgt wird und keine zusätzlichen Leitungen vorgehalten werden müssen.

Weiter ist vorgesehen, dass Endlagen des Schlittens erkannt werden, wobei die Reinigungsmittelabgabeeinheit bei Erreichen einer der Endlagen entweder auf den Fördergurt aufgesetzt wird oder von diesem abgenommen wird. Die Endlagen des Schlittens definieren somit Start- und Endpunkt des Reinigungsvorgangs.

Beim Rückführen des Schlittens vom Endpunkt der Reinigung zu dem Startpunkt wird dieser zumeist entlang der vertikal ausgerichteten Trommellängsachse bewegt, wobei in weiterer Ausgestaltung vorgesehen ist, dass der Schlitten selbsttätig mittels eines Widerstands durch ein Medium gebremst wird. Geeignete Medien können bspw. Luft, Glykol oder andere wässrige Medien sein.

Das Aufsetzen der Reinigungsmittelabgabeeinheit auf oder das Abnehmen der Reinigungsmittelabgabeeinheit von dem Fördergurt erfolgt nach einer anderen Weiterbildung, indem die Reinigungsmittelabgabeeinheit werkzeuglos an die Reinigungsmittelzuführeinheit angeschlossen wird. Die Reinigungsmittelabgabeeinheit kann somit getrennt gelagert werden und ermöglicht eine technisch einfache Konstruktion. Dies kann entweder händisch oder automatisiert, d. h. teil- oder vollautomatisiert, erfolgen.

Alternativ kann die Reinigungsmittelabgabeeinheit für die Zeiten, in denen nicht gereinigt wird, auch in den Schlitten eingefahren werden, so dass diese nicht mehr in einen produktführenden Teil des Fördergurtes hineinragt.

Weiter betrifft die Erfindung auch ein Wendelfördersystem mit einem endlosen, kurvengängigen Fördergurt, wenigstens einer motorisch angetriebenen Trommel, um die herum der Fördergurt zwischen einem Trommeleinlauf und einem Trommelauslauf schraubenförmig gewickelt ist, wobei der Fördergurt zwischen dem Trommeleinlauf und dem Trommelauslauf an der Trommel gehalten ist, und einer Reinigungseinrichtung. Dieses Wendelfördersystem zeichnet sich erfindungsgemäß dadurch aus, dass die Reinigungseinrichtung durch eine trommelseitige Reinigungsmittelzuführeinheit und eine Reinigungsmittelabgabeeinheit gebildet ist, und dass die Reinigungsmittelabgabeeinheit wenigstens für die Dauer einer durchzuführenden Reinigung des Wendelfördersystems auf dem Fördergurt aufsteht und mit der Trommel um diese herum bewegbar ist.

Die auf dem Fördergurt aufstehende Reinigungsmittelabgabeeinheit wird dann während der Reinigung von der Trommel mitgenommen, ohne einen eigenen Antrieb aufweisen zu müssen. Dabei werden alle feststehenden Teile, wie die Gurtschienen, von der Reinigungsmittelabgabeeinheit passiert und können gründlich von verschiedenen Seiten gereinigt werden, ohne dass sich größere Sprühschatten ergeben.

Hierzu kann die Reinigungsmittelabgabeeinheit mehrere Reinigungsdüsen aufweisen, die in unterschiedliche Richtungen ausgerichtet sind und einander überschneidende Sprühkegel aufweisen. Die Reinigungsmittelabgabeeinheit weist dabei vorteilhafterweise eine Breite auf, die der Breite der zu reinigenden Teile beziehungsweise Gurtschienen entspricht bzw. zumindest an diese angepasst ist, um diese möglichst vollständig zu erfassen. Ergänzend können zudem Bürsten oder weitere Reinigungsgeräte an der Reinigungsmittelabgabeeinheit angeordnet sein. Dies können bspw. rotierende Düsensysteme, insbesondere an beweglichen, steuerbaren Armen, oder rotierende Einzeldüsen, sogenannte Spinner, sein.

Insbesondere kann damit eine bedarfsgerechte Reinigung der feststehende Teile, wie Gurtschienen, Stützen oder Träger erfolgen. Die Reinigungsmittelabgabeeinheit kann zur Unterstützung der bedarfsgerechten Reinigung zusätzliche Sensoren oder Kamerasysteme aufweisen.

In weiterer Ausgestaltung steht die Reinigungsmittelabgabeeinheit mit wenigstens einer Kufe auf dem Fördergurt auf. Durch den wendelförmig um die Trommel herum angeordneten Fördergurt wird die Reinigungsmittelabgabeeinheit dabei in Richtung des Trommelauslaufs gezwungen.

Nach einer Weiterbildung weist die Reinigungsmittelzuführeinheit wenigstens einen zwischen dem Trommeleinlauf und dem Trommelauslauf entlang einer Trommellängsachse verschiebbaren Schlitten auf, an den die Reinigungsmittelabgabeeinheit angeschlossen ist. Der Schlitten ist dabei derart in die Trommel integriert, dass dieser sich bei einem Reinigungsvorgang über die gesamte Wegstrecke der Reinigungsmittelabgabeeinheit zusammen mit dieser von dem Trommeleinlauf bis zu dem Trommelauslauf bewegt. Über den Schlitten ist die Reinigungsmittelabgabeeinheit dann auch reinigungsmittelleitend mit einer Reinigungsmittelleitung der Reinigungsmittelzuführeinheit verbunden.

In weiterer Ausgestaltung des Wendelfördersystems ist der Schlitten in einem parallel der Trommellängsachse ausgerichteten Fahrschacht geführt. Der Schlitten ist damit entlang seines Fahr- bzw. Verschiebeweges optimal zu allen Längsseiten seines Fahr- bzw. Verschiebeweges geschützt und kann auf einfache Weise zu einander gegenüberliegenden Seiten des Fahrschachtes abgestützt sein. Dadurch sind Verkantungen beim Verschieben des Schlittens vermieden. Hierzu weist der Schlitten vorteilhafterweise an Laufflächen des Fahrschachtes abgestützte Laufräder auf.

Darüber hinaus ist der Schlitten nach einer Weiterbildung an einem zwischen dem Trommeleinlauf und dem Trommelauslauf gespannten, endseitig umgelenkten Endlosgurt gehalten. Dieser Endlosgurt greift mittig zu den Laufflächen des Fahrschachtes an dem Schlitten an und bewirkt damit eine weitere Führung, die einem Verkanten zusätzlich entgegenwirkt.

Dem Schlitten ist in weiterer Ausgestaltung zudem eine selbsttätig wirkende Bremseinrichtung zugeordnet. Der in seine Ausgangslage also den Startpunkt des Reinigungsvorgangs zurückzubewegende, insbesondere abwärtszubewegende, Schlitten wird dadurch ohne weiteres Einwirken abgebremst und gleitet somit jederzeit kontrolliert zurück. Beschädigungen durch eine ausbleibende Bremsung sind damit effektiv vermieden.

Nach einer Weiterbildung ist die selbsttätig wirkende Bremseinrichtung durch wenigstens ein Flügelrad gebildet, das insbesondere kraftübertragend mit wenigstens einer der beiden Umlenkungen des Endlosgurtes verbunden ist. Mit zunehmender Geschwindigkeit des Schlittens erhöht sich damit, aufgrund des sich schneller drehenden Flügelrades, der durch dieses bewirkte Widerstand.

Um sicherzustellen, dass der Schlitten in seine zu Beginn und Ende eines Reinigungsvorgangs zu erreichende Position gelangt ist, ist wenigstens einer Endlage des Schlittens vorteilhafterweise wenigstens ein Erkennungssensor zugeordnet, insbesondere ein Näherungsschalter zugeordnet. Der Erkennungssensor ermöglicht einerseits eine Rückmeldung über das Erreichen der jeweiligen Endlage des Schlittens und andererseits kann der Schlitten unter Berücksichtigung der Position in der jeweiligen Endlage auf den Fördergurt aufgesetzt oder von diesem abgenommen werden. Um beide Endlagen zu erkennen, kann die Geschwindigkeit der Trommel erfasst werden, woraus sich eine zurückgelegte Wegstrecke der Reinigungsmittelabgabeeinheit berechnen lässt.

Beide Endlagen in einem Wendelfördersystem können auch erkannt werden, indem in weiterer Ausgestaltung zwei Erkennungssensoren vorgesehen sind, von denen ein erster einer ersten Endlage und ein zweiter der zweiten Endlage zugeordnet ist. Neben Näherungsschaltern eignen sich als Erkennungssensoren auch Kamerasysteme oder Taster.

Das Abnehmen der Reinigungsmittelabgabeeinheit von dem Fördergurt oder das Aufsetzen dieser auf den Fördergurt erfolgt nach einer Weiterbildung, indem die Reinigungsmittelabgabeeinheit werkzeuglos an die Reinigungsmittelzuführeinheit anschließbar ist. Die Reinigungsmittelabgabeeinheit und der Schlitten der Reinigungsmittelzuführeinheit können damit besonders einfach konstruiert sein, da nur wenige bewegliche Teile vorgesehen werden müssen. Zudem kann bei dieser Lösung durch eine die Reinigungsmittelabgabeeinheit anschließende Person sichergestellt werden, dass diese korrekt angeschlossen ist und es kann eine regelmäßige Sichtprüfung des betreffenden Bereichs des Wendelfördersystems erfolgen.

Alternativ kann auch eine aufwendigere aber vollautomatische Lösung vorgesehen werden, gemäß der die Reinigungsmittelabgabeeinheit in den Schlitten und Fahrschacht einklappbar oder einfahrbar ist, beispielsweise durch eine teleskopierbare Reinigungsmittelabgabeeinheit.

Um die Reinigungsmittelleitung hinter dem entlang der Trommellängsachse verschiebbaren Schlitten nachführen zu können, ist nach einer Weiterbildung vorgesehen, dass die Reinigungsmittelleitung der Reinigungsmittelzuführeinheit innerhalb der Trommel strecken- bzw. längenveränderlich ausgebildet ist. Dies wird in weiterer Ausgestaltung der Erfindung dadurch erreicht, dass der Reinigungsmittelleitung wenigstens eine kraftbelastete Umlenkung zugeordnet ist. Je nachdem, ob sich der Schlitten näher an dem Trommelauslauf oder näher an dem Trommeleinlauf befindet, bildet sich demnach aufgrund einer an der Reinigungsmittelleitung ziehenden Kraft eine größere oder kleinere Schlaufe der Reinigungsmittelleitung aus.

Um diese Kraft aufzubringen kann an der Umlenkung in weiterer Ausgestaltung wenigstens ein Gewicht angreifen. Die kraftbelastete Umlenkung wirkt damit ähnlich einem Flaschenzug durch ein Zusammenspiel von Schwerkraft, wenigstens einer losen Umlenkrolle und wenigstens einer positionsfesten Umlenkrolle. Die Reinigungsmittelleitung wird dabei unabhängig von einer jeweiligen Position des Schlittens unter gleichbleibender Spannung gehalten. Das an der Umlenkung angreifende Gewicht ist dabei bei einem abwärts zu bewegenden Schlitten kleiner als das Gewicht des abwärts zu bewegenden Schlittens. Alternativen zu einem Gewicht kann stattdessen auch eine Feder oder dergleichen kraftbelastend an der Umlenkung angreifen.

Um auch den Fahrschacht bei einem Reinigungsvorgang mit zu reinigen, weist der Schlitten gemäß einer Weiterbildung wenigstens eine in den Fahrschacht gerichtete Reinigungsdüse auf. Mit dieser wird dann parallel zu den Gurtschienen und anderen außenseitigen Teilen der Trommel auch der Fahrschacht gereinigt.

Der Fahrschacht kann zudem oder alternativ zu der an dem Schlitten angeordneten Reinigungsdüse an seinen Seitenwänden Ausnehmungen aufweisen, die einen Zugang vom Trommelinnenraum her gewährleisten. Über diese Ausnehmungen kann der Fahrschacht dann auch zusammen mit dem Trommelinnenraum gereinigt werden.

Ein Ausführungsbeispiel der Erfindung, aus dem sich weitere erfindungswesentliche Merkmale ergeben können, ist in der Zeichnung dargestellt. Gleiche Teile sind dabei in allen Figuren der Zeichnung mit gleichen Bezugszeichen versehen. Es zeigen:
- Fig. 1:: eine perspektivische Darstellung eines erfindungsgemäßen Wendelfördersystems;
- Fig. 2:: eine Detaildarstellung einer Reinigungsmittelabgabeeinheit des Wendelfördersystems gemäß Fig. 1;
- Fig. 3:: eine Draufsicht auf das Wendelfördersystem gemäß Fig. 1 und Fig. 2; und
- Fig. 4:: eine Detaildarstellung einer Reinigungsmittelzuführeinheit des Wendelfördersystems gemäß Fig. 1 bis Fig. 3.

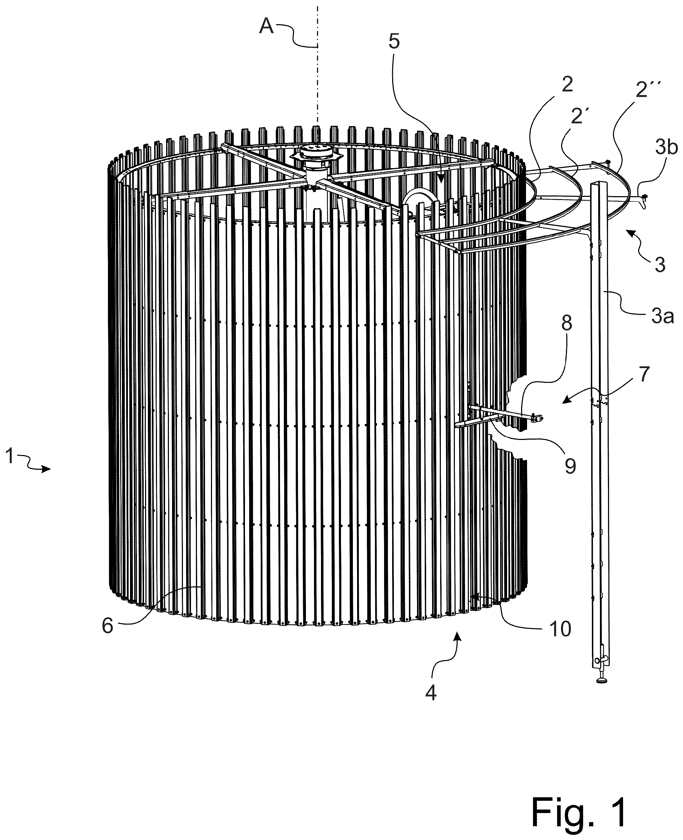

Aus Fig. 1 ist eine Trommel 1 eines erfindungsgemäßen Wendelfördersystems ersichtlich, um die herum ausschnittsweise dargestellte Gurtschienen 2, 2', 2" und Stützen 3 der Gurtschienen 2, 2', 2" aus senkrecht ausgerichteten Pfosten 3a und waagerecht ausgerichteten Trägern 3b angeordnet sind. Die Gurtschienen 2, 2', 2" sind dabei in ihrer Gesamtheit schraubenförmig von einem Trommeleinlauf 4 bis zu einem Trommelauslauf 5 um die Trommel 1 gewickelt und bilden eine ansteigende Auflageebene für einen endlosen, kurvengängigen Fördergurt. An deren Mantel 6 weist die Trommel 1 eine Reinigungseinrichtung 7 auf, die mit einer Reinigungsmittelabgabeeinheit 8 in einen durch die Gurtschienen 2, 2', 2" definierten Produktförderbereich hineinragt und bestimmungsgemäß mit einer Kufe 9 auf dem nicht dargestellten Fördergurt aufliegt. Die Reinigungsmittelabgabeeinheit 8 weist dabei ausgehend von dem Mantel 6 der Trommel 1 eine Längserstreckung auf, die sich annähernd über die gesamte Breite des Fördergurtes erstreckt.

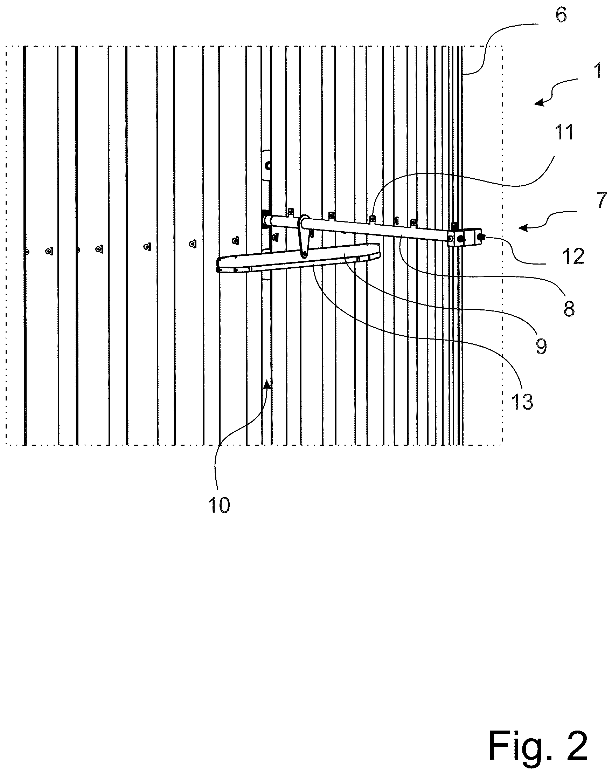

Über eine insbesondere auch aus Fig. 2 ersichtliche Ausnehmung 10, die sich parallel einer vertikal ausgerichteten Trommellängsachse A der Trommel 1 über die gesamte Länge der Trommel 1 erstreckt, ist die Reinigungsmittelabgabeeinheit 8 aus einem Trommelinnenraum nach außen geführt und entlang der Trommellängsachse A verschiebbar.

Weiter zeigt Fig. 2 insgesamt fünf Reinigungsdüsen 11, die bei auf dem Fördergurt aufstehender Reinigungsmittelabgabeeinheit 8 auf oberhalb der Reinigungsmittelabgabeeinheit 8 befindliche Gurtschienen 2, 2', 2" gerichtet sind. Die Reinigungsdüsen 11 sind dabei gleichmäßig über die Länge der Reinigungsmittelabgabeeinheit 8 und die Breite des Fördergurtes verteilt angeordnet. Zwei weitere Reinigungsdüsen 12 sind an einem freien Ende der Reinigungsmittelabgabeeinheit 8 von dem Mantel 6 wegweisend nach außen gerichtet. Die Kufe 9 weist zudem einen Schuh 13 auf, mit dem diese mit dem Fördergurt in Kontakt steht.

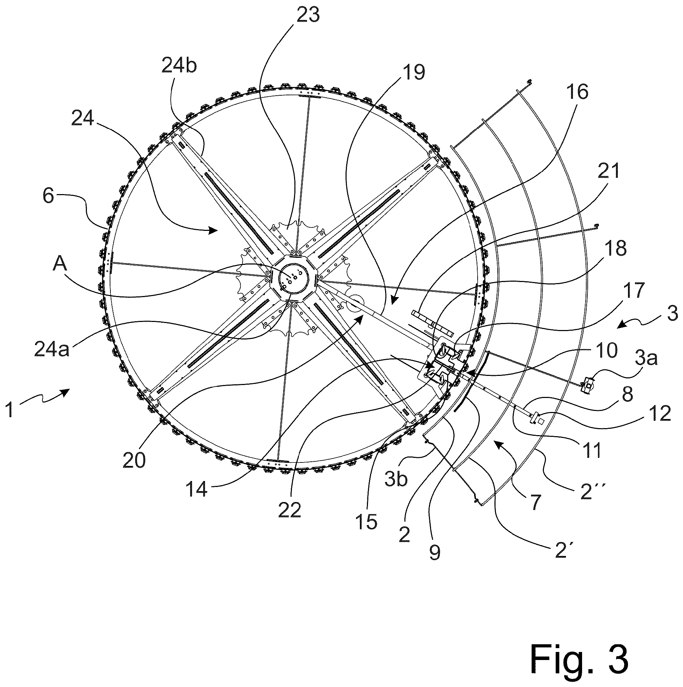

Fig. 3 zeigt eine Draufsicht auf das Wendelfördersystem, aus der nochmals ersichtlich wird, dass die Reinigungsmittelabgabeeinheit 8 ausgehend von dem Mantel 6 eine Länge aufweist, die in etwa der Breite des Fördergurtes entspricht, insbesondere wenigstens 80 % der Breite des Fördergurtes entspricht. Die Breite des Fördergurtes ist dabei gleich dem Abstand der beiden äußeren Gurtschienen 2 und 2" zueinander.

Im Trommelinnenraum ist ein Fahrschacht 14 zu erkennen, innerhalb dem ein Schlitten 15 einer Reinigungsmittelzuführeinheit 16 parallel der Trommellängsachse A verfahrbar ist. Dieser Schlitten 15 trägt die Reinigungsmittelabgabeeinheit 8 an einem werkzeuglos verbindendem Kupplungsstück. In dem Fahrschacht 14 ist der Schlitten 15 mit Laufrädern 17 an Laufflächen 18 des Fahrschachtes 14 abgestützt. Die Laufflächen 18 und Laufräder 17 sind dabei jeweils Ecken des Fahrschachtes 14 zugeordnet und in Winkeln von 90° zueinander angeordnet.

Weiter zeigt die Draufsicht der Fig. 3 eine Reinigungsmittelleitung 19, welche von der Trommellängsachse A zu dem Schlitten 15 geführt ist. Der Reinigungsmittelleitung 19 ist eine gewichtsbelastete Umlenkung 20 zugeordnet, mittels der die Reinigungsmittelleitung 19 innerhalb der Trommel 1 streckenveränderlich angeordnet ist.

Dem Fahrschacht 14 und dem Schlitten 15 ist zudem ein Flügelrad 21 zugeordnet. Das Flügelrad 21 ist kraftübertragend mit einem Endlosgurt 22 verbunden, der wiederum fest mit dem Schlitten 15 verbunden ist, und bildet eine Bremseinrichtung des zu seinem Startpunkt zurückzuführenden Schlittens 15 aus. Die Bremseinrichtung wirkt dabei über den zur Geschwindigkeit des Schlittens 15 steigenden Luftwiderstand des Flügelrades 21 auf die Geschwindigkeit des Schlittens 15.

Darüber hinaus zeigt Fig. 3 einen Antrieb 23 der Trommel 1, der über ein zentrales Antriebsgestänge 24 auf den Mantel 6 der Trommel 1 wirkt. Dieses Antriebsgestänge 24 besteht aus einer mittigen Antriebswelle 24a und Verbindungsstreben 24b, welche die mittige Antriebswelle 24a mit dem Mantel 6 verbinden.

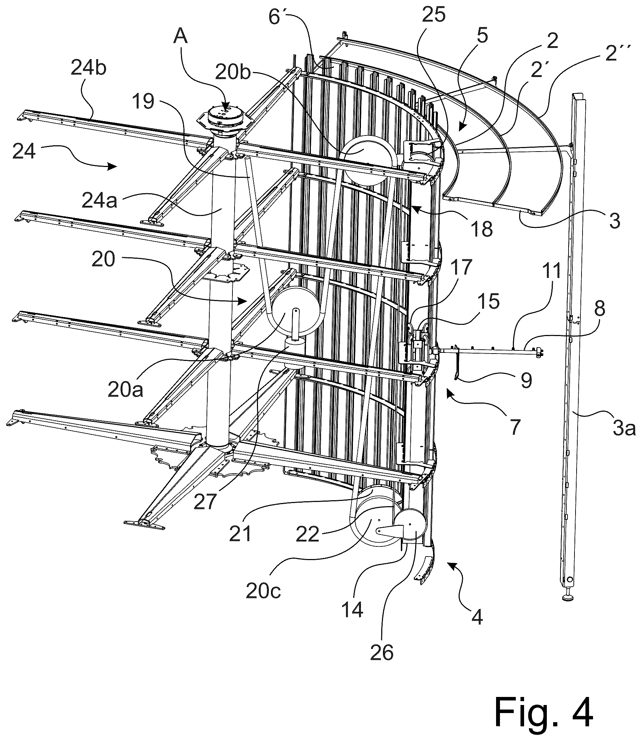

Die Trommel 1 ist in Fig. 4 nur mit einem Teil des Antriebsgestänges 24 und einem Mantelausschnitt 6' dargestellt, so dass der Aufbau der Reinigungsmittelzuführeinheit 16 in seiner Gesamtheit deutlich wird. Der dem in dem Fahrschacht 14 verschiebbaren Schlitten 15 zugeordnete Endlosgurt 22 ist an einem oberen und einem unteren Ende des Fahrschachts 14 zwischen einer oberen Umlenkrolle 25 und einer unteren Umlenkrolle 26 aufgespannt. Über einen Riementrieb und zwischengeschaltete Verbindungsachsen steht die untere Umlenkrolle 26 kraftübertragend mit dem Flügelrad 21 in Verbindung. Das Flügelrad 21 ist damit ebenso dem unteren Ende des Fahrschachts 14 zugeordnet.

Die Reinigungsmittelleitung 19 ist mit einem ersten Ende an der mittigen Antriebswelle 24a angeschlossen und führt von dieser über eine lose Umlenkrolle 20a und zwei positionsfeste Umlenkrollen 20b, 20c zu dem Schlitten 15. Die zwischen der Antriebswelle 24a und der Umlenkrolle 20b angeordnete lose Umlenkrolle 20a ist mit einem Gewicht 27 beschwert und ermöglicht unter gleichbleibender Krafteinwirkung auf die Reinigungsmittelleitung 19 einen Längen- beziehungsweise Streckenausgleich dieser in Abhängigkeit von der Position des Schlittens 15 in dem Fahrschacht 14. Die Umlenkrolle 20c ist dem unteren Ende des Fahrschachts 14 zugeordnet, wobei die Reinigungsmittelleitung 19 von der Umlenkrolle 20c parallel zu der Trommellängsachse A zu dem Schlitten 15 geführt ist.

Je näher der Schlitten 15 jetzt an das obere Ende des Fahrschachts 14 gelangt, desto länger ist die in dem Fahrschacht 14 benötigte Reinigungsmittelleitung 19 und die lose Umlenkrolle 20a wird in Richtung der oberen Umlenkrolle 20b gezogen. Wird der Schlitten 15 in dem Fahrschacht 14 in Richtung des unteren Endes des Fahrschachtes 14 bewegt, verkürzt sich die Länge der Reinigungsmittelleitung 19 in dem Fahrschacht 14 und die lose Umlenkrolle 20a wird von dem Gewicht 27 aufgrund der Schwerkraft nach unten in Richtung der unteren Umlenkrolle 20c gezogen. Innerhalb der Trommel 1 bildet sich damit eine Leitungsreserve der Reinigungsmittelleitung 19.

## Patentansprüche

1. Verfahren zur Reinigung eines Wendelfördersystems, bei dem ein endloser, kurvengängiger Fördergurt von einem Trommeleinlauf (4) zu einem Trommelauslauf (5) schraubenförmig um wenigstens eine motorisch angetriebene Trommel (1) geführt wird,
**dadurch gekennzeichnet,**
**dass** eine Reinigungsmittelabgabeeinheit (8) wenigstens für die Dauer einer durchzuführenden Reinigung des Wendelfördersystems auf dem Fördergurt aufsteht,
**dass** die auf dem Fördergurt aufstehende Reinigungsmittelabgabeeinheit (8) mit der angetriebenen Trommel (1) um diese herum geführt wird, und
**dass** die Reinigungsmittelabgabeeinheit (8) während der Reinigung des Wendelfördersystems trommelseitig mit Reinigungsmittel versorgt wird.

2. Verfahren nach Anspruch 1, **dadurch gekennzeichnet, dass** die Reinigungsmittelabgabeeinheit (8) von dem Trommeleinlauf (4) bis zu dem Trommelauslauf (5) von der Trommel (1) mitgeführt wird.

3. Verfahren nach einem der Ansprüche 1 oder 2, **dadurch gekennzeichnet, dass** einen Schlitten (15) der Reinigungsmittelzuführeinheit (16) zusammen mit der Reinigungsmittelabgabeeinheit (8) während der Reinigung entlang einer Trommellängsachse (A) der Trommel (1) verschoben wird.

4. Verfahren nach Anspruch 3, **dadurch gekennzeichnet, dass** Endlagen des Schlittens (15) erkannt werden, wobei die Reinigungsmittelabgabeeinheit (8) bei Erreichen einer der Endlagen entweder auf den Fördergurt aufgesetzt wird oder von diesem abgenommen wird.

5. Verfahren nach einem der Ansprüche 3 oder 4, **dadurch gekennzeichnet, dass** der Schlitten (15) selbsttätig mittels eines Widerstands eines Mediums gebremst wird.

6. Verfahren nach einem der Ansprüche 1 bis 5, **dadurch gekennzeichnet, dass** die Reinigungsmittelabgabeeinheit (8) für die Dauer der Reinigung werkzeuglos an eine Reinigungsmittelzuführeinheit (16) angeschlossen wird.

7. Wendelfördersystem mit einem endlosen, kurvengängigen Fördergurt, wenigstens einer motorisch angetriebenen Trommel (1), um die herum der Fördergurt zwischen einem Trommeleinlauf (4) und einem Trommelauslauf (5) schraubenförmig gewickelt ist, wobei der Fördergurt zwischen dem Trommeleinlauf (4) und dem Trommelauslauf (5) an der Trommel (1) gehalten ist, und einer Reinigungseinrichtung (7),
**dadurch gekennzeichnet,**
**dass** die Reinigungseinrichtung (7) durch eine trommelseitige Reinigungsmittelzuführeinheit (16) und eine Reinigungsmittelabgabeeinheit (8) gebildet ist, und
**dass** die Reinigungsmittelabgabeeinheit (8) wenigstens für die Dauer einer durchzuführenden Reinigung des Wendelfördersystems auf dem Fördergurt aufsteht und mit der Trommel (1) um diese herum bewegbar ist.

8. Wendelfördersystem nach Anspruch 7, **dadurch gekennzeichnet, dass** die Reinigungsmittelzuführeinheit (16) wenigstens einen zwischen dem Trommeleinlauf (4) und dem Trommelauslauf (5) entlang einer Trommellängsachse (A) verschiebbaren Schlitten (15) aufweist, an den die Reinigungsmittelabgabeeinheit (8) angeschlossen ist.

9. Wendelfördersystem nach Anspruch 8, **dadurch gekennzeichnet, dass** der Schlitten (15) in einem parallel der Trommellängsachse (A) ausgerichteten Fahrschacht (14) geführt ist.

10. Wendelfördersystem nach einem der Ansprüche 8 oder 9, **dadurch gekennzeichnet, dass** der Schlitten (15) an einem zwischen dem Trommeleinlauf (4) und dem Trommelauslauf (5) gespannten, endseitig umgelenkten Endlosgurt (22) gehalten ist.

11. Wendelfördersystem nach einem der Ansprüche 8 bis 10, **dadurch gekennzeichnet, dass** dem Schlitten (15) eine selbsttätig wirkende Bremseinrichtung zugeordnet ist.

12. Wendelfördersystem nach Anspruch 11, **dadurch gekennzeichnet, dass** die selbsttätig wirkende Bremseinrichtung durch wenigstens ein Flügelrad (21) gebildet ist, das insbesondere kraftübertragend mit wenigstens einer der beiden Umlenkungen des Endlosgurtes (22) verbunden ist.

13. Wendelfördersystem nach einem der Ansprüche 8 bis 12, **dadurch gekennzeichnet, dass** wenigstens einer Endlage des Schlittens (15) wenigstens ein Erkennungssensor zugeordnet ist, insbesondere ein Näherungsschalter zugeordnet ist.

14. Wendelfördersystem nach einem der Ansprüche 7 bis 13, **dadurch gekennzeichnet, dass** die Reinigungsmittelabgabeeinheit (8) werkzeuglos an die Reinigungsmittelzuführeinheit (16) anschließbar ist.

15. Wendelfördersystem nach einem der Ansprüche 7 bis 14, **dadurch gekennzeichnet, dass** die Reinigungsmittelzuführeinheit (16) eine innerhalb der Trommel (1) streckenveränderliche Reinigungsmittelleitung (19) aufweist.

16. Wendelfördersystem nach Anspruch 15, **dadurch gekennzeichnet, dass** der Reinigungsmittelleitung (19) wenigstens eine kraftbelastete Umlenkung (20) zugeordnet ist.

17. Wendelfördersystem nach Anspruch 9, **dadurch gekennzeichnet, dass** der Schlitten (15) wenigstens eine in den Fahrschacht (14) gerichtete Reinigungsdüse (12) aufweist.

18. Wendelfördersystem nach Anspruch 10, **dadurch gekennzeichnet, dass** der Fahrschacht (14) an seinen Seitenwänden Ausnehmungen aufweist.
